Europäisches Patentamt

European Patent Office

Office européen des brevets

(19)

(11) Veröffentlichungsnummer: **0 337 054**
**A2**

## (12) EUROPÄISCHE PATENTANMELDUNG

(21) Anmeldenummer: **89100386.5**

(22) Anmeldetag: **11.01.89**

(51) Int. Cl.⁴: **G01N 21/45**

(30) Priorität: **14.04.88 DE 3812334**

(43) Veröffentlichungstag der Anmeldung:
**18.10.89 Patentblatt 89/42**

(84) Benannte Vertragsstaaten:
**AT CH DE FR GB IT LI NL SE**

(71) Anmelder: **Hartmann & Braun**
**Aktiengesellschaft**
**Gräfstrasse 97**
**D-6000 Frankfurt am Main 90(DE)**

(72) Erfinder: **Zöchbauer, Michael**
**Ebertstrasse 19**
**D-6370 Oberursel 1(DE)**
Erfinder: **Fabinski, Walter**
**An der Landwehr 70**
**D-6239 Kriftel(DE)**

(54) Interferometrische Einrichtung.

(57) Interferometrische Einrichtung zum Nachweis einer Substanz mit strukturiertem Absorptionsspektrum mit einer Strahlungsquelle (L), in deren Strahlengang die zu untersuchende Substanz (K), ein Interferenzfilter, dessen Dicke den Abstand der Interferenzlinien bestimmt und ein Detektor (D) angeordnet sind. Das Interferenzfilter ist ein elektrisch abstimmbares Filter (E) mit einer Platte aus elektrooptischem Material (P) und teildurchlässig verspiegelten Stirnseiten (S).

Fig. 3a

EP 0 337 054 A2

## Interferometrische Einrichtung

Die Erfindung betrifft eine interferometrische Einrichtung zum Nachweis einer Substanz nach dem Oberbegriff des Anspruches 1.

Eine bekannte interferometrische Einrichtung dieser Art ist in der DE-OS 26 04 471 beschrieben. Zum Nachweis einer Substanz mit einer charakteristischen optischen Wegdifferenz wird eine Anordnung verwendet, die folgende Elemente umfaßt: einen Polarisator, ein doppelbrechendes Plättchen, dessen Dicke gleich der charakteristischen optischen Wegdifferenz der gesuchten Substanz ist, sowie einen zweiten Polarisator, der als Analysator arbeitet. Diese Einrichtung erfordert das ständige Rotieren des Analysators, sie ist daher durch den notwendigen mechanischen Antrieb verschleißbehaftet. Hierdurch wird der Einsatz in Anwendungsbereichen erschwert, die hohe Standzeiten und einen geringen Wartungsaufwand erfordern, wie dies beispielsweise bei Messungen in industriellen Prozessen der Fall ist.

Eine mit Interferenzfiltern arbeitende interferometrische Einrichtung wird von J.J. Howarth und H.M. Stanier in J. Sci. Instruments, 1965, Vol. 42, Seiten 526-528, beschrieben. Hier handelt es sich um einen Infrarot-Prozeßanalysator, der zwei Interferenzfilter höherer Ordnung (Fabry-Perot-Filter) aufweist, deren Dicke in definierter Weise auf das periodische Absorptionsspektrum der gesuchten Substanz abgestimmt ist, wobei das eine Filter ein Meßfilter und das andere ein Referenzfilter ist. Zur zeitmultiplexen Erfassung von Meß- und Referenzsignal wird ein Chopperrad verwendet, d.h. auch diese interferometrische Einrichtung ist verschleißbehaftet und in ihrer Anwendungsbreite beschränkt.

Der Erfindung liegt die Aufgabe zugrunde, eine interferometrische Einrichtung nach dem Oberbegriff des Patentanspruches 1 zu schaffen, die es ermöglicht, Moleküle mit strukturiertem, insbesondere periodischem oder quasiperiodischem Absorptionsspektrum hochselektiv zu erfassen und gleichzeitig auf mechanisch bewegte Teile völlig zu verzichten.

Die Lösung der Aufgabe erfolgt erfindungsgemäß durch die Merkmale des kennzeichnenden Teiles des Patentanspruches 1.

Als interferometrisches Element wird ein elektrisch abstimmbares Filter verwendet, das aus einem elektrooptisch aktiven Material besteht. Hierzu eignen sich sowohl Kristallplatten, z.B. aus Lithiumniobat, als auch mit doppelbrechenden Flüssigkristallen gefüllte optische Zellen. Derartige Materialien ändern ihren Brechungsindex z. B. in Abhängigkeit von einem angelegten elektrischen Feld. Die elektrooptische Platte bzw. die Flüssigkristall-Zelle ist an beiden Stirnseiten teildurchlässig verspiegelt, so daß ein Fabry-Perot-Element entsteht. Über den Verspiegelungsgrad läßt sich in bekannter Weise die Halbwertbreite des Fabry-Perot-Elementes einstellen.

Je nach Art des Spektrums bzw. Ziel der Messung wie beispielsweise hohe Empfindlichkeit, hohe Selektivität oder einfache Adaptierbarkeit an die Meßaufgabe, ergeben sich Ausführungsformen, wie sie in dem Unteranspruch 3 gekennzeichnet sind.

Wenn eine hohe Empfindlichkeit gewünscht wird, ist eine Ausführungsform zu wählen, die einen relativ großen Teil des Absorptionsspektrums erfaßt. Dies ist besonders dann vorteilhaft, wenn ein quasiperiodisches Linienspektrum vorliegt, wie im Fall des CO-Moleküls bei 4,6 $\mu$m. In diesem Fall ist die Dicke der elektrooptischen Platte bzw. der mit Flüssigkristallen gefüllten Zelle so gewählt, daß das erzeugte Interferenzmuster der charakteristischen optischen Wegdifferenz des Moleküls entspricht, das nachzuweisen ist. Das bedeutet, der Abstand zwischen den einzelnen Interferenzordnungen des elektrisch abstimmbaren Filters entspricht genau dem Abstand der periodischen Absorptionslinien der nachzuweisenden Substanz.

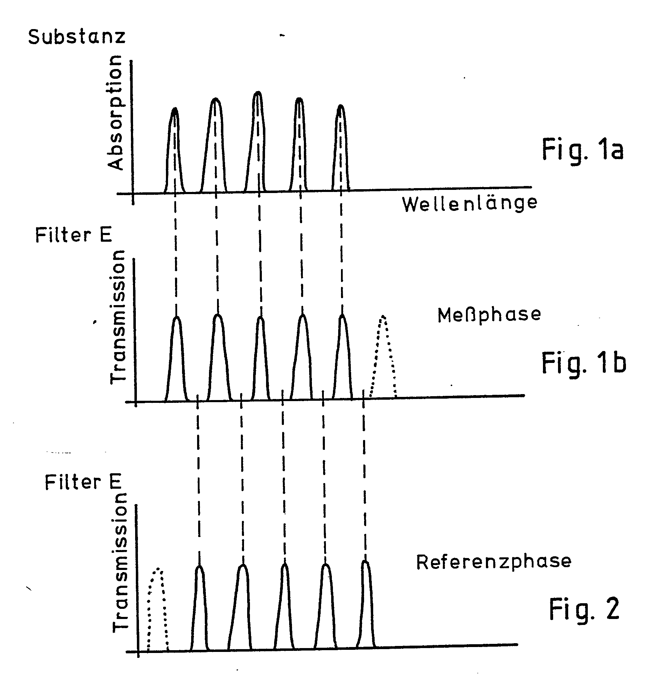

Als Ausgangspunkt sei zunächst angenommen, daß das Interferenzmuster des Filters wie in Fig. 1b dargestellt, mit den periodischen Absorptionslinien der Substanz, die in Fig. 1a dargestellt sind, genau zur Deckung gebracht wird. Die erfindungsgemäße Einrichtung befindet sich jetzt in der Meßphase, die sich durch größtmögliche Absorption der gesuchten Substanz auszeichnet. Durch Anlegen eines elektrischen Feldes an die teildurchlässigen Spiegelflächen des elektrisch abstimmbaren Filters kann nun in einfacher Weise das Interferenzmuster so verschoben werden, daß die Interferenzmuster des Filters und die Absorptionslinien der Substanz gerade "auf Lücke" stehen; Fig. 2 zeigt diesen Zustand. In diesem Zustand (Referenzphase) ist die Absorption der gesuchten Substanz gleich Null. Durch periodische Modulation des elektrischen Feldes läßt sich ein ständiger Wechsel zwischen Meß- und Referenzphase erzielen, ohne daß mechanisch bewegte Teile benötigt werden. Gegenüber der mechanischen Modulation gestattet die erfindungsgemäße elektrische Modulation wesentlich höhere Modulationsfrequenzen, was ein besseres Nutz-/Störsignal-Verhältnis und eine schnellere Messung erlaubt.

Eine hohe Selektivität wird besonders dann erreicht, wenn mit dem erfindungsgemäßen Interferometer eine einzige Linie erzeugt wird, derart, daß ihre Bandbreite klein ist gegen den Abstand zweier Linien in einem periodischen oder quasiperiodischen Ab sorptionsspektrum. Durch einfaches Verschieben der Zentralwellenlänge über die Absorptionslinie der zu untersuchenden Substanz entsteht ein Nutzsignal immer dann, wenn die Meßkomponente in der Absorptionsstrecke vorhanden ist. Da die überdeckte Korrelationsfläche geringer ist als bei der oben beschriebenen Variante, ist hier mit einem größeren Rauschen zu rechnen. Der Vorteil liegt in der Auswählbarkeit der Wellenlänge. Diese kann in einen Bereich gelegt werden, in dem eine Überlappung mit einer störenden Komponente nicht auftritt.

Eine dritte Möglichkeit, die hier beschriebene Einrichtung vorteilhaft anzuwenden, ergibt sich, wenn das Spektrum nicht periodisch, sondern wenigstens strukturiert ist. Durch Auswahl einer Wellenlänge in einem Bereich relativ starker Absorptionsänderung der Meßkomponente wird bei Anwesenheit derselben ebenfalls ein Nutzsignal erzeugt. Wird die Wellenlänge so gewählt, daß die Absorption von Störkomponenten in diesem Bereich gering ist oder sich nicht oder nur geringfügig über die Wellenlänge ändert, wird mit der erfindungsgemäßen Anordnung die gewünschte Selektivität erzeugt.

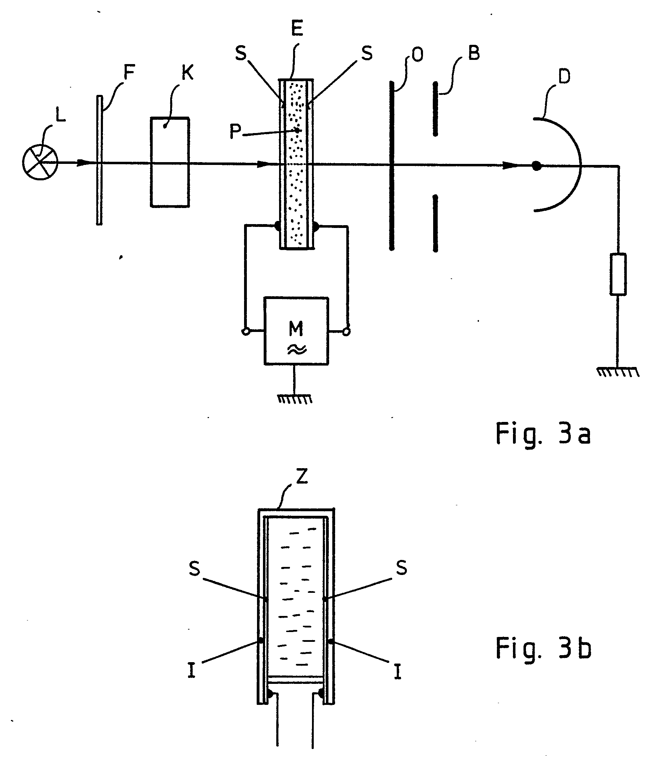

Für die Untersuchung unterschiedlicher Substanzen braucht man lediglich entsprechende Platten bzw. Flüssigkristallzellen unterschiedlicher Dikke zu verwenden. Im folgenden soll anhand von Fig. 3a ein Ausführungsbeispiel der Erfindung näher erläutert werden. Das von der Strahlungsquelle L kommende breitbandige Licht wird von einem optischen Filter F zunächst auf den interessierenden Teil der Strahlung begrenzt. Im Strahlengang folgt anschließend eine Küvette K mit der zu untersuchenden Substanz sowie ein elektrisch abstimmbares Filter E mit einer Platte P, die aus einem elektrooptischen Material besteht und die an beiden Stirnflächen die teildurchlässigen Spiegel S aufweist. Die Spiegel S besitzen elektrische Anschlüsse, die zu einer Modulationseinheit M führen. Hinter dem Filter E ist ein Objektiv O angeordnet. Durch eine Blende B kann der interferometrische Auswertebereich auf einen mittleren Bereich in der Nähe der optischen Achse beschränkt werden. Die durch die Blende hindurchgehende Strahlung wird vom Detektor D erfaßt und in ein elektrisches Signal umgesetzt.

An die Stelle der Platte P kann auch eine mit doppelbrechenden Flüssigkeiten gefüllte Zelle Z verwendet werden, wie sie in Fig. 3b dargestellt ist. Die lichtdurchlässigen Fenster I der Zelle Z besitzen auf der Innenseite eine teildurchlässige verspiegelte Schicht S.

## Ansprüche

1. Interferometrische Einrichtung zum Nachweis einer Substanz mit strukturiertem, insbesondere periodischem oder quasiperiodischem Absorptionsspektrum, mit einer Strahlungsquelle, in deren Strahlengang
- die zu untersuchende Substanz,
- ein Interferenzfilter, dessen Dicke den Abstand der Interferenzlinien bestimmt
- und ein Detektor
angeordnet sind, dadurch gekennzeichnet, daß
- das Interferenzfilter ein elektrisch abstimmbares Filter (E) ist, welches aus einer Platte (P) aus elektrooptischem Material besteht deren Stirnseiten teildurchlässig verspiegelt (S) sind,
- daß eine Verschiebung der Durchlaßcharakteristik des Filters (E) mit Hilfe einer elektrischen Spannung, die an die verspiegelten Stirnseiten der Platte (P) angelegt wird, erzeugt wird, deren Amplitude ein Maß für die Verschiebung ist
- und daß die Dicke der Platte so gewählt ist,
   a) daß der Abstand der erzeugten Interferenzlinien dem Abstand der Absorptionslinien der zu bestimmenden Substanz entspricht oder
   b) daß eine Linie der Strahlung ausgeblendet wird, deren Bandbreite gering ist gegen den Abstand zweier Linien der zu untersuchenden Substanz oder
   c) daß eine Linie der Strahlung so ausgeblendet wird, daß sie die Flanke einer Absorptionsbande der zu untersuchenden Substanz überlappt.

2. Interferometrische Einrichtung nach Anspruch 1, dadurch gekennzeichnet, daß die Platte (P) gegen eine mit doppelbrechenden Flüssigkristallen gefüllte Zelle (Z), deren Fenster (I) auf der Innenseite teildurchlässig verspiegelt (S) sind, austauschbar ist.

3. Interferometrische Einrichtung nach Anspruch 1 oder Anspruch 2, dadurch gekennzeichnet, daß zum Nachweis mehrerer Komponenten einer Substanz mehrere elektrisch abstimmbare optische Filter hintereinander in den Strahlengang eingeschaltet sind.

Substanz

Absorption

Fig. 1a

Wellenlänge

Filter E

Transmission

Meßphase

Fig. 1b

Filter E

Transmission

Referenzphase

Fig. 2

Fig. 3a

Fig. 3b